# EUROPÄISCHE PATENTSCHRIFT

(11) **EP 1 785 323 B1**
(45) Veröffentlichungstag und Bekanntmachung des Hinweises auf die Patenterteilung: **12.01.2011**
(21) Anmeldenummer: 06122793.0
(22) Anmeldetag: 24.10.2006
(51) Int. Cl.: B60S 9/08

(54) **Höhenverstellbare Stütze für Sattelauflieger oder dergleichen**
Supports adjustable in height for semi-trailers or similar
Supports ajustables en hauteur pour semi-remorques ou similaires

(30) Priorität: 12.11.2005 DE 202005017728 U; 22.11.2005 DE 202005018217 U
(43) Veröffentlichungstag der Anmeldung: 16.05.2007
(73) Patentinhaber: SAF-HOLLAND Verkehrstechnik GmbH, 78224 Singen-Hohentwiel (DE)
(72) Erfinder: Riedl, Reinhold, 63897 Miltenberg (DE)
(74) Vertreter: Bauer, Clemens

(56) Entgegenhaltungen:
- EP-B1- 1 104 369
- DE-C2- 19 616 704
- DE-U1- 20 305 175
- US-A- 4 097 840
- US-A1- 2004 080 125

## Beschreibung

Die Erfindung bezieht sich auf eine höhenverstellbare Stütze für Sattelauflieger oder dergleichen gemäß dem Oberbegriff des Anspruchs 1. Derartige Stützen sind, in meist paarweiser Anordnung, am vorderen Bereich des Sattelaufliegers angeordnet.

Ein gattungsgemäßes Stützenpaar ist aus der EP 1 104 369 B1 bekannt. Eine solche so genannte Vorrichtung zum Abstützen des Aufliegers eines Sattelschleppers weist ein innenliegendes zweistufiges Zahnradschaltgetriebe für einen Schnellgang und einen Lastgang auf. Dabei wird der Schnellgang bei unbelasteter Stütze zum schnellen Aus- oder Einfahren und der Lastgang zum Anheben oder Absenken des Vorderbereichs des Aufliegers benutzt. Dem Zahnradschaltgetriebe ist ein Kegelradsatz nachgeordnet, dessen Tellerrad auf einer Spindel sitzt. Neben der Ausgestaltung der Stütze für den Handbetrieb wird in dieser Schrift auch eine Ausführung einer Stütze mit Motorantrieb vorgeschlagen, bei der jedoch keine Alternativmöglichkeit zum manuellen Betreiben besteht. Diese Vorrichtung ist entweder, in erster Ausgestaltung nur für den herkömmlichen manuellen Betrieb, oder in einer Alternativversion nur ausschließlich für einen motorischen Betrieb geeignet und deckt daher nicht alle heutigen Anforderungen ab, worauf später eingegangen wird.

In der DE 196 16 704 C2 wird eine Antriebsvorrichtung für die Kombination mit manuell antreibbaren so genannten Sattelstützen beschrieben. Dabei muß ein Umrüstvorgang erfolgen, indem ein zusätzliches Antriebsgetriebe an ein außenliegend an der Stütze befindliches, als Sattelstützengetriebe bezeichnetes, zweistufiges Zahnradschaltgetriebe anzubauen ist, wenn ein motorischer Schnellgang realisiert werden soll. Nach dem Zahnradschaltgetriebe erfolgt der weitere Kraftfluß ebenfalls, wie oben, über einen Kegelradsatz, dessen Tellerrad auf der Spindel angeordnet ist. Das zusätzliche Antriebsgetriebe besteht aufwendigerweise aus einem Antriebsgehäuse mit einer weiteren Zahnradstufe und einem angeflanschten so genannten Antriebsaggregat. Nach der beschriebenen umständlichen Aufrüstung verliert das zweistufige Zahnradschaltgetriebe seine Schaltfunktion. Und außerdem wird, in besonders nachteiliger Weise, dadurch ein manuelles Antreiben der Stütze unmöglich. Ein Handbetrieb ist erst wieder möglich, nach dem das beschriebene Antriebsgetriebe abmontiert und eine Handkurbel angebaut ist. Derartige Umrüstaktivitäten sind während des Betreibens, beim Wechsel vom Handbetrieb zum motorischen Antrieb und umgekehrt, dem Fahrer nicht zumutbar. Aufgrund der aufwendigen und voluminösen Ausführung des Antriebsgetriebes und der, ohne Ab-/Umbaumaßnahmen, ebenfalls nicht vorhandenen Alternative eines Kraftbetriebs sowie eines Handbetriebs, erfüllt auch diese Konzeption nicht alle Anforderungen.

Aus der US 4,097,840 ist ebenfalls eine Sattelaufliegerstütze bekannt. Die dort beschriebene Stütze weist ebenfalls ein außenliegendes Antriebsgetriebe auf. Für den manuellen Betrieb ist auf einer Seite ein Zapfen zum Aufstecken einer Handkurbel vorgesehen und auf der anderen Seite kann der Kraftfluß alternativ von einer zwischen dem Rahmen des Sattelaufliegers eingebauten motorischen Antriebseinheit erfolgen. Die Antriebseinheit besteht sehr aufwendigerweise aus einem Gehäuse mit eingebautem Elektromotor, einem zusätzlichen Reduziergetriebe sowie Kupplungen usw. und ist anordnungsbedingt relativ ungünstig zu montieren.

DE-20305175 U offenbart die Gegenstand des Oberbegriffs des Anspruchs 1.

Die heutigen Sattelschlepper mit luftgefederten Hinterachsen sind in der Lage, über die Druckluftfederbälge am hinteren Achsaggregat, ihr Heck mit der darauf befindlichen Sattelkupplung bezüglich der Sattelhöhe zu regulieren und erforderlichenfalls auch den Vorderbereich eines auch beladenen Sattelaufliegers anzuheben. Um Zeit einzusparen, ist es besonders wichtig die noch unbelasteten Sattelaufliegerstützen möglichst schnell bis zum Boden des Abstellortes auszufahren, bevor der Sattelschlepper abgekoppelt und weggefahren werden kann. Das gleiche gilt für das Aufsatteln, wonach die Stützen wieder schnellstmöglich einzufahren sind. Zum Aufsatteln kann derselbe oder ein ebenfalls mit Luftfederung ausgestatteter Sattelschlepper, nach eventueller Angleichung seiner Sattelhöhe mit dem Heck, unter den abgestellten Sattelauflieger gefahren und angekoppelt werden. Grundsätzlich ist heute daher bei beschriebener Federungs-/Hubtechnik zum Aufsatteln meistens kein höhenmäßiges Angleichen des Vorderbereichs des Sattelaufliegers an die Sattelhöhe des Sattelschleppers mehr erforderlich und somit kein Hubvorgang der Stützen notwendig. Das gilt im besonderen, wenn innerhalb so genannter geschlossener Fuhrparks ausschließlich artgleiche Sattelschlepper bzw. höhenmäßig darauf abgestimmte Sattelauflieger vorhanden sind. In einer Reihe von Grenzfällen jedoch, z.B. beim Einsatz von älteren Sattelschleppern mit Blattfederungen, die quasi fixe Stattelhöhen aufweisen, muß der Sattelauflieger gegebenenfalls durch einen Hubvorgang mittels der Stützen auf die Sattelhöhe des Sattelschleppers gebracht werden.

Im Trend zur Zeit-/Kosteneinsparung sowie der Bedienungserleichterung und insbesondere einer Automatisierung des An- und Abkoppelungsvorgangs der Sattelzüge sind motorisch zu betreibende Sattelaufliegerstützen unumgänglich. Andererseits muß bei diesen Stützen eine Möglichkeit zum Handantrieb bestehen. Diese Notwendigkeit ergibt sich sowohl aufgrund der geschilderten eventuellen Erfordernis eines Höhenangleichs von Sattelaufliegern, als auch eines möglichen Defekts des Kraftantriebs. Nur so kann bei heutiger Transportlogistik (z.B. just in time) das Ausfallrisiko von Sattelaufliegern vermieden werden.

Der Erfindung liegt die Aufgabe zugrunde eine Stütze für Sattelaufliege zu schaffen bei der mit sehr geringem Aufwand ein Motorantrieb realisiert wird und die im Einsatz alternativ motorisch oder manuell betreibbar ist, wobei wie herkömmlich, für den Handbetrieb eine Umschaltmöglichkeit in den Schnell- oder den Lastgang besteht.

Diese Aufgabe ist erfindungsgemäß durch die im Anspruch 1 gekennzeichnete Stütze gelöst.

Für die erfindungsgemäße Stütze wird vorgeschlagen eine neuartige Anordnung von Verzahnungen vorzusehen. Dazu ist vorzugsweise das bei solchen Stützen zur Drehmomenteinleitung des Handantriebs auf die Spindel üblicherweise vorhandene Tellerrad lediglich so zu gestalten, daß es wirtschaftlicherweise in doppelter Funktion genutzt werden kann.

Wenn in bevorzugter Ausgestaltung das Tellerrad zusätzlich zu der üblichen Kegelradverzahnung am oberen Teilerrandbereich, mit nach oben weisenden Zähnen, auch am unteren Bereich seines Randes eine Kegelradverzahnung erhält, deren Zähne nach unten weisen, kann dort ein kraftgetriebenes Kegelritzel eingreifen und das Tellerrad alternativ motorisch antreiben. Der Handantrieb von Tellerrad und Spindel kann dagegen, wie bisher üblich, über ein Kegelrad das über dem Tellerrad sitzt und in dessen obere Kegelradverzahnung eingreift erfolgen.

Zumal das herkömmlicherweise bereits relativ groß dimensionierte Tellerrad eine große Zähnezahl besitzt, sollte bei der Ausgestaltung des Kegelritzels für den Motorantrieb eine möglichst geringe Zähnezahl vorgesehen werden. Damit entsteht einerseits der Vorteil kostengünstig mit einem kleinen Motor für den Stützenantrieb auszukommen und andererseits ist bei dieser äußerst kompakten Gestaltung der bisher übliche Getrieberaum im Stützenaußenrohr, nach lediglich einer kleinen Aussparung für die Unterbringung des motorisch antreibbaren Kegelritzels ausreichend. Alternativ zur unteren Verzahnung des Tellerrades ist beispielsweise auch das Anbringen eines drehfest am Tellerrad bzw. an der Spindel sitzender Kegelradkranz mit nach unten weisenden Zähnen denkbar.

Vorteilhafterweise kann das Kegelritzel direkt auf dem Antriebszapfen eines horizontal am Stützenaußenrohr anzuordnenden Motors sitzen und in das Stützenaußenrohr hineinragen, um in die untere Keglradverzahnung des Tellerrades einzugreifen.

Wenn bei der Motorbefestigung ein Zwischenflansch benutzt wird, kann in diesem auch vorteilhaft der Schaft des Kegelritzels abgelagert werden.

Als weitere Ausgestaltung der erfindungsgemäßen Stütze wird vorgeschlagen das Tellerrad zusätzlich zu seiner oberen Kegelradverzahnung am Rand mit einer Stirnradverzahnung zu versehen. Dafür ist ein vertikal angeordneter Motor vorzusehen, dessen Antriebszapfen eine Stirnradverzahnung aufweist, oder daß der Antriebszapfen ein verzahnungsadäquates Zahnritzel trägt, womit der Eingriff in die Stirnradverzahnung des Tellerrades und dessen Antrieb erfolgen kann.

Aus arbeitssicherheitlichen Gründen darf während des Handbetriebs der Stütze der Motorantrieb nicht einschaltbar sein. Daher wird vorgeschlagen im Zahnradschaltgetriebe des Handantriebs einen Sensor vorzusehen, der abtastet, ob ein Freigang der Zahnräder besteht. Erst nachdem der Sensor diesen Status steuerungsmäßig quittiert hat, darf der Motor einzuschalten sein.

Schließlich ist der Vorteil hervorzuheben, daß auch für vorhandene, bisher handelsübliche Sattelaufliegerstützen eine Aufrüstmöglichkeit auf das aktuelle Anforderungsniveau besteht. Es kann nämlich auch ein nachträglicher Einbau eines Motorantriebs mit den erfindungsgemäß wenigen erforderlichen Teilen und geringem Aufwand erfolgen.

Vorteilhafte Ausgestaltungen der Erfindung gehen aus den Unteransprüchen hervor.

Die Erfindung wird anschließend anhand der Zeichnungen erläutert. Es zeigen:
**Fig**. 1 eine Frontansicht der erfindungsgemäßen Stütze, wobei im oberen Bereich vorn je hälftig ein außenliegendes Zahnradschaltgetriebe und eine Stützenausbildung mit innenliegendem Zahnradschaltgetriebe dargestellt sind,
**Fig.** 2 eine Seitenansicht der in Fig.1 gezeigten Stütze,
**Fig**. 3 einen Querschnitt der in Fig.1 gezeigten Stütze entlang der Linie A-A,
**Fig.** 4 einen Längsschnitt der Stütze entlang der Linie B-B in Fig.3.
**Fig**. 5 eine Frontansicht des oberen Bereichs der Stütze analog zu Fig.1 jedoch mit anderer Motoranodnung,
**Fig**. 6 eine Draufsicht der Stütze gemäß Fig.5 und
**Fig**. 7 einen Längsschnitt der Stütze entlang der Linie C-C in Fig.3.

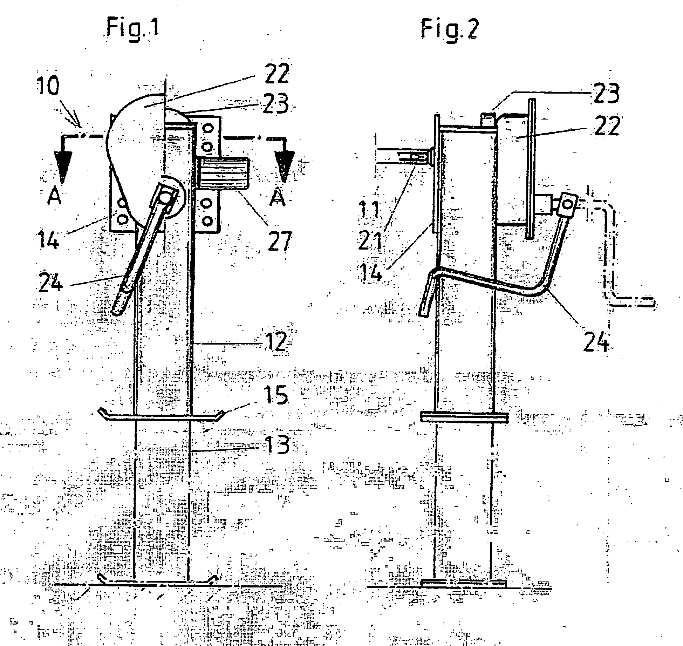

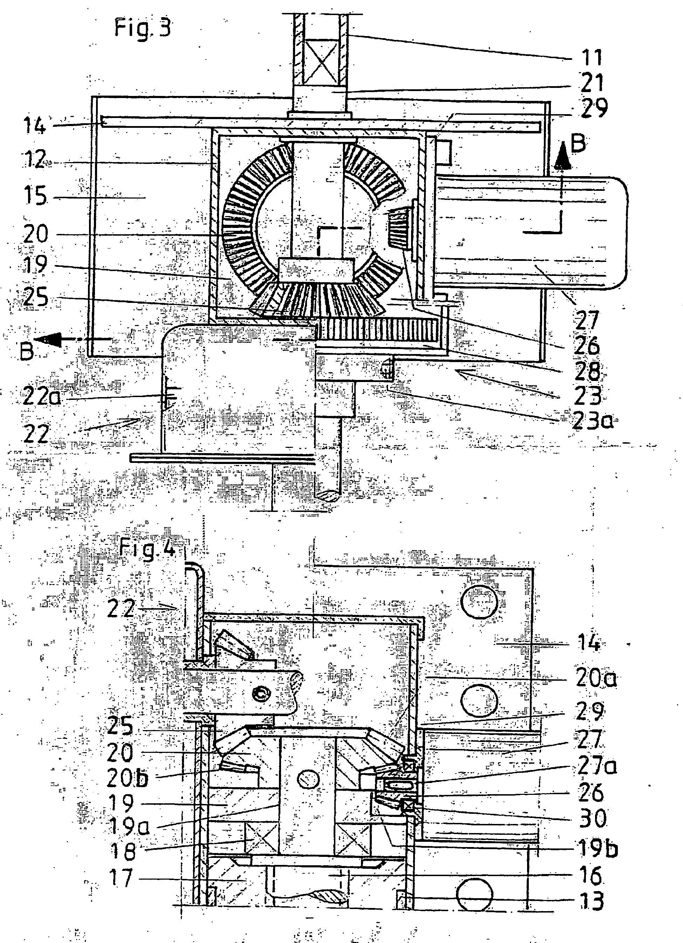

Die in Fig. 1 bis 7 gezeigte Stütze **10** wird paarweise am Chassis eines Sattelaufliegers in dessen vorderen Bereich befestigt und ist in Transportstellung eingefahren, d.h. in verkürztem Zustand. Bevor der Sattelauflieger vom Sattelschlepper abgekuppelt wird, werden die Stützen **10** ausgefahren.

Da die Stützen **10** eines jeden Paares nahezu identisch sind bzw. weil die in der Regel von einer ersten Stütze **10** aus über eine Verbindungswelle **11** mitangetriebene zweite Stütze **10** üblicherweise nur getriebemäßig einfacher ausgestaltet ist, d.h. lediglich eine Kegelradstufe aufweist, genügt es eine antriebseitige Stütze **10** zu beschreiben.

Die Stütze **10** weist ein Stützenaußenrohr **12** und ein darin längsverschiebbar gelagertes Innenrohr **13** auf. Das Stützenaußenrohr **12** und das Stützeninnenrohr **13** besitzen vorzugsweise quadratische Querschnitte. Die Stütze **10** wird über eine am Stützenaußenrohr **12** sitzende Anschraubplatte 14 am Sattelaufliegerrahmen befestigt. Am unteren Ende des Stützeninnenrohres **12** ist ein Fuß **15** zum Aufsetzen auf den Boden befestigt. Die Stütze **10** weist eine Spindel **16** mit einer Mutter **17** auf. Auf der Spindelschulter sitzt ein Axiallager **18**, das sich an einer im Stützenaußenrohr befestigten Lagerplatte **19** abstützt.

Die Lagerplatte **19** besitzt zur Radiallagerung der Spindel **16** eine durchgehende Lagerbohrung **19a**. Über der Lagerplatte **19** befindet sich auf dem Zapfen der Spindel **16** ein drehfestes Tellerrad 20.

Im Zentrum der Stütze **10** und oberhalb des Tellerrades **20** ist eine Getriebeausgangswelle **21** vorhanden, die in den Rohrwänden des Stützenaußenrohrs **12,** gelagert ist. Auf einem im Querschnitt quadratischen Zapfen der Getriebeausgangswelle **21** ist die hohle Verbindungswelle **11** aufgesteckt, über welche die zweite Stütze **10** mitangetrieben wird. An der Vorderseite der Stütze **10** befindet sich ein außenliegendes Zahnradschaltgetriebe **22** bzw. alternativ dazu, vorwiegend im vorderen Innenbereich des Stützenaußenrohres **12**, ein innenliegendes Zahnradschaltgetriebe **23**. Die andeutungsweise gezeigten Zahnradschaltgetriebe **22,23** entsprechen handelsüblichen Ausführungen und werden hier nur funktionell beschrieben. Sie weisen jeweils zwei Zahnradstufen auf von denen eine eine Übersetzung ins Schnelle und die andere eine solche ins Langsame besitzt. Beim Schalten werden durch axiales Verschieben der Eingangswelle des Zahnradschaltgetriebes **22,23 ,** an der sich eine wegklappbare Handkurbel **24** befindet, die Zahnräder alternativ in Eingriff gebracht. Dadurch wird für den Handbetrieb der Stütze **10** wahlweise ein Schnellgang oder Lastgang realisiert. Zwischen den möglichen Eingriffstellungen der Zahnräder befindet sich eine Freigangstellung worauf später noch erfin-dungsgemäß eingegangen wird.

In eine obere Kegelradverzahnung **20a** des Tellerrades **20** greift ein Kegelrad **25** ein, das auf der quer über dem Tellerrad **20** liegenden Ausgangswelle des Zahnradschaltgetriebes **22,23** sitzt. Über das Kegelrad **25** erfolgt der Kraftfluß während des Handantriebs der Stütze **10.**

Im unteren Bereich des Randes des Tellerrades **20** befindet sich eine untere Kegelradverzahnung **20 b**. Mit der Kegelradverzahnung **20 b** ist ein Kegelritzel **26** gepaart. Das Kegelritzel **26** sitzt drehfest auf dem Antriebszapfen **27a** eines Motors **27** und ragt in den Getrieberaum innerhalb des Stützenaußenrohres **12** hinein, wofür eine Aussparung **19a** in der Lagerplatte **19** vorhanden ist. Bei einer Stützenausführung mit innenliegendem Zahnradschaltgetriebe **23**, weist ein so genannter Lagerbock **28** eine dementsprechende Ausnehmung **28a** für das Kegelritzel 26 auf. Die Befestigung des Motors 27 erfolgt unter Einfügung-eines Zwischenflansches 29 an dem Stützenaußenrohr **12.** Der Zwischenflansch **29** ist in der Wand des Stützenaußenrohres **12** zentriert und trägt das Lager **30** für den Schaft des Kegelritzels **26**. Der motorische Antrieb der Stütze **10** erfolgt durch den Motor **27** über das Kegelritzel **26** und die Kegelradverzahnung **20 b** auf das Tellerrad **20** und weiter auf den Spindeltrieb. Eine Einschaltung des Motors **27** ist nur möglich, wenn sich das entsprechende Zahnradschaltgetriebe **22,23** des Handantriebs in der Freigangstellung befindet. Um diese Sicherheitsbedingung zu gewährleisten ist erfindungsgemäß im jeweiligen Zahnradschaltgetriebe **22,23** ein Sensor **22a,23a** vorgesehen, der diesen Status steuerungsmäßig quittiert.

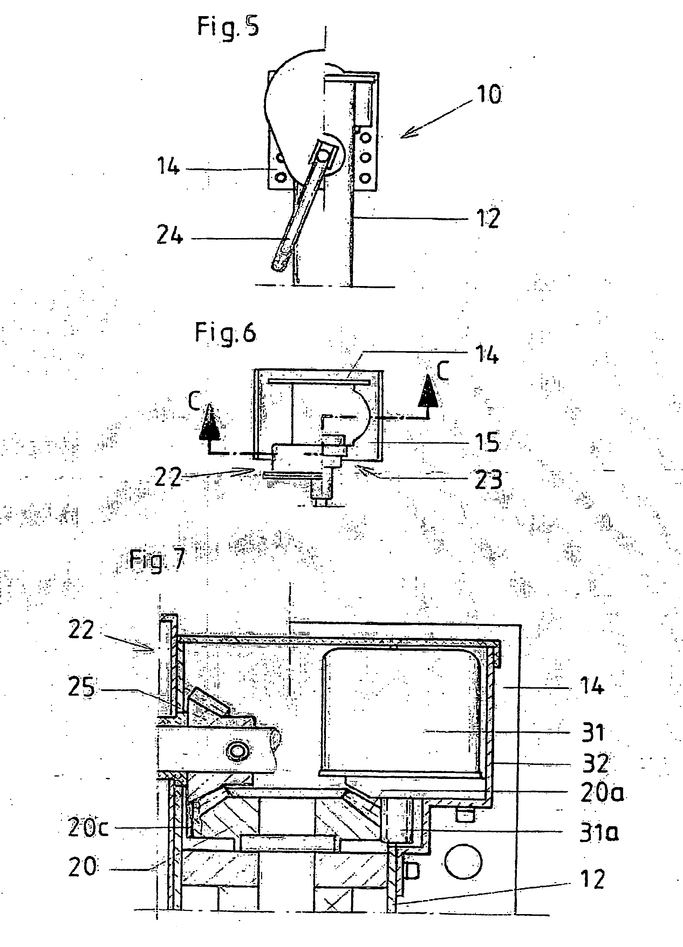

Die Fig. 5 bis 7 zeigen eine andere erfindungsgemäße Ausgestaltung der Stütze **10**. Dabei ist das Tellerrad **20** so gestaltet, daß es außer der oberen Kegelradverzahnung **20a** eine Stirnradverzahnung **20c** besitzt. In die Stirnradverzahnung **20c** des Tellerrades **20** greift eine Stirnradverzahnung **31a** ein, die sich am Antriebszapfen eines vertikal angeordneten Motors **31** befindet. Der Motor **31** sitzt jeweils etwa halb im Stützenaußenrohr **12** und in einem Motorhalter **32**. Der Motorhalter **32** dient neben der daran erfolgenden Befestigung des Motor **31** auch zur Ummantelung des nicht im Stützenaußenrohr **12** befindlichen Bereichs des Motor **31**.

### Bezugszeichenliste

- **10**: Stütze
- **11**: Verbindungswelle
- **12**: Stützenaußenrohr
- **13**: Stützeninnenrohr
- **14**: Anschraubplatte
- **15**: Fuß
- **16**: Spindel
- **17**: Mutter
- **18**: Axiallager
- **19**: Lagerplatte
- **19a**: Lagerbohrung
- **19b**: Aussparung
- **20**: Tellerrad
- **20a**: obere Kegelradverzahnung
- **20b**: untere Kegelradverzahnung
- **20c**: Stirnradverzahnung
- **21**: Getriebeeausgangswelle
- **22**: außenliegendes Zahnradschaltgetriebe
- **22a**: Sensor
- **23**: innenliegendes Zahnradschaltgetriebe
- **23a**: Sensor
- **24**: Handkurbel
- **25**: Kegelrad
- **26**: Kegelritzel
- **27**: Motor
- **27a**: Antriebszapfen
- **28**: Lagerbock
- **28a**: Ausnehmung
- **29**: Zwischenflansch
- **30**: Lager
- **31**: Motor
- **31a**: Stirnradverzahnung
- **32**: Motorhalter

## Patentansprüche

1. Höhenverstellbare Stütze (**10**) für Sattelauflieger oder dergleichen mit einem ortsfest angebrachten Stützenaußenrohr (**12**), einem darin längsverschiebbar angeordneten Stützeninnenrohr (**13**) sowie einer in der Stütze (**10**) gelagerten Spindel (**16**), auf der eine am Stützeninnenrohr (**13**) befestigte Mutter (**17**) angeordnet ist, und einem auf der Spindel (**16**) sitzendem Tellerrad (**20**) in das ein darüber befindliches Kegelrad (**25**), das über ein am Stützenaußenrohr (**12**) angebrachtes außenliegendes Zahnradschaltgetriebe (**22**) oder ein in das Stützenaußenrohr (**12**) integriertes Zahnradschaltgetriebe (**23**) manuell antreibbar ist, eingreift, **dadurch gekennzeichnet, daß** das Tellerrad (20) außer der oberen Kegelradverzahnung (20a), deren Zähne nach oben weisen, eine zusätzlich Verzahnung aufweist oder, daß sich eine dazu adäquate Verzahnung an einem Teil befindet, welches am Tellerrad (**20**) oder an der Spindel (**16**) befestigt ist.

2. Stütze nach Anspruch 1 **dadurch gekennzeichnet, daß** die zusätzliche Verzahnung eine untere Kegelradverzahnung (**20b**) ist, welche sich am unteren Randbereich des Tellerrades (**20)** befindet und deren Zähne nach unten weisen.

3. Stütze nach Anspruch 1 und 2 **dadurch gekennzeichnet, daß** in die Kegelradverzahnung **(20b)** des Tellerrades **(20)** ein motorisch antreibbares Kegelritzel **(26)** eingreift.

4. Stütze nach Anspruch 1 bis 3 **dadurch gekennzeichnet, daß** das Kegelritzel **(26)** auf dem Antriebszapfen **(27a)** des Motors **(27)** sitzt, und daß der Motor (**27)** unter Einfügung eines in der Wand des Stützenaußenrohres (**12**) zentrierten Zwischenflansches (**29**) am Stützenaußenrohr (**12**) befestigt ist.

5. Stütze nach Anspruch 1 und 4 **dadurch gekennzeichnet, daß** das Kegelritzel (**26**) im Zwischenflansch (**29**) abgelagert ist.

6. Stütze nach Anspruch 1 **dadurch gekennzeichnet, daß** die zusätzliche Verzahnung eine Stirnradverzahnung (**20c**) ist, weiche sich am Randbereich des Tellerrades (**20**) befindet.

7. Stütze nach Anspruch 1 und 6 **dadurch gekennzeichnet, daß** in die Stirnradverzahnung (**20c**) des Tellerrades (**20**) ein motorisch antreibbares Zahnritzel eingreift.

8. Stütze nach Anspruch 1,6 und 7 **dadurch gekennzeichnet, daß** die Antriebswelle des Motors (**31**) eine Stirnradverzahnung (**31a**) aufweist, die in die Stirnradverzahnung (**20c**) Tellerrades (**20**) eingreift, oder daß auf der Antriebswelle des Motors (**31**) ein adäquat verzahntes Zahnritzel sitzt.

9. Stütze nach Anspruch **1 dadurch gekennzeichnet, daß** für den Einbau des Kegelritzel **(26)** an der Lagerplatte **(19)** eine Aussparung **(19a)** bzw. am Lagerbock **(28)** eine Ausnehmung **(28a)** vorhanden ist,

10. Stütze nach Anspruch 1 **dadurch gekennzeichnet, daß** die Achse des Motors (**27**) in der selben Ebene wie die Achse der Spindel (**16**) liegt und der Motors **(27)** parallel zur Querachse der Anschraubplatte (**15**) angeordnet ist.

11. Stütze nach Anspruch 1 **dadurch gekennzeichnet, daß** der Motor (**31**) so angeordnet ist, daß seine Achse parallel zur Achse der Spindel (16) steht. - .

12. Stütze nach Anspruch 1 **dadurch gekennzeichnet, daß** ein Motorhalter **32** zur Befestigung des Motors **31** vorhanden ist, der so ausgebildet ist, daß er den außerhalb des Stützenaußenrohres **12** befindlichen Bereich des Motors **31** gehäusemäßig umschließt und mit dem Stützenaußenrohres **12** fest oder abnehmbar verbunden ist.

13. Stütze nach Anspruch 1,2,3 und 6 **dadurch gekennzeichnet, daß** sich das Tellerrad (**20**) mit oberer Kegelradverzahnung (**20a**) und unterer Kegelradverzahnung (**20b**) oder Stirnradverzahnung (**20c**) sowie das Kegelritzel **(26)** oder das Zahnritzel und der Motor (**27,30**) in bzw. an der ersten oder der zweiten Stütze eines Stützenpaares befinden.

14. Stütze nach Anspruch 1 **dadurch gekennzeichnet, daß** im Zahnradschaltgetriebe **(22,23)** ein Sensor **(22a, 23b)** vorhanden ist, der steuerungsmäßig die Freigangstellung des Zahnradschaltgetriebes (**22,23**) quittiert, bevor der Motor (**27**) eingeschaltet und die Stütze (**10**) motorisch betrieben werden kann.

## Claims

1. Height-adjustable support (10) for semi-trailers or the like, with a stationary outer support tube (12), an inner support tube (13), which is arranged in a longitudinally displaceable manner therein, and a spindle (16), which is mounted in the support (10) and on which a nut (17) which is fastened to the inner support tube (13) is arranged, and with a ring gear (20) which sits on the spindle (16) and in which there engages a bevel gear (25) which is situated above it and can be driven manually via an external gearwheel switching mechanism (22) fitted to the outer support tube (12), or a gearwheel switching mechanism (23) integrated in the outer support tube (12), **characterized in that**, in addition to the upper bevel gear toothing (20a), the teeth of which point upwards, the ring gear (20) has an additional toothing or **in that** a toothing which is adequate for this purpose is situated on a part which is fastened to the ring gear (20) or to the spindle (16).

2. Support according to Claim 1, **characterized in that** the additional toothing is a lower bevel gear toothing (20b) which is situated on the lower edge region of the ring gear (20) and the teeth of which point downwards.

3. Support according to Claims 1 and 2, **characterized in that** a motor-driveable bevel pinion (26) engages in the bevel gear toothing (20b) of the ring gear (20).

4. Support according to Claims 1 to 3, **characterized in that** the bevel pinion (26) sits on the drive journal (27a) of the motor (27), and **in that** the motor (27) is fastened to the outer support tube (12) with the insertion of an intermediate flange (29) centred in the wall of the outer support tube (12).

5. Support according to Claims 1 and 4, **characterized in that** the bevel pinion (26) is mounted in the intermediate flange (29).

6. Support according to Claim 1, **characterized in that** the additional toothing is a spur gear toothing (20c) which is situated on the edge region of the ring gear (20).

7. Support according to Claims 1 and 6, **characterized in that** a motor-driveable pinion engages in the spur gear toothing (20c) of the ring gear (20).

8. Support according to Claims 1, 6 and 7, **characterized in that** the drive shaft of the motor (31) has a spur gear toothing (31a) which engages in the spur gear toothing (20c) of the ring gear (20), or **in that** an adequately toothed pinion sits on the drive shaft of the motor (31).

9. Support according to Claim 1, **characterized in that** there is a cut-out (19a) on the bearing plate (19) or a recess (28a) on the bearing bracket (28) for the installation of the bevel pinion (26).

10. Support according to Claim 1, **characterized in that** the axis of the motor (27) lies in the same plane as the axis of the spindle (16), and the motor (27) is arranged parallel to the transverse axis of the screw-on plate (15).

11. Support according to Claim 1, **characterized in that** the motor (31) is arranged in such a manner that its axis is parallel to the axis of the spindle (16).

12. Support according to Claim 1, **characterized in that** there is a motor holder (32) for the fastening of the motor (31), which motor holder is designed in such a manner that it surrounds that region of the motor (31) which is situated outside the outer support tube (12) in the manner of a housing and is connected fixedly or removably to the outer support tube (12).

13. Support according to Claims 1, 2, 3 and 6, **characterized in that** the ring gear (20) with the upper bevel gear toothing (20a) and lower bevel gear toothing (20b) or spur gear toothing (20c), and the bevel pinion (26) or the pinion and the motor (27, 30), are situated in or on the first or the second support of a pair of supports.

14. Support according to Claim 1, **characterized in that** there is a sensor (22a, 23b) in the gearwheel switching mechanism (22, 23) which, as a control measure, acknowledges the free motion position of the gearwheel switching mechanism (22, 23) before the motor (27) can be switched on and the support (10) can be operated by motor.

## Revendications

1. Support réglable en hauteur (10) pour semi-remorques ou similaires, comprenant un tube extérieur de support (12) monté stationnaire, un tube intérieur de support (13) agencé dans celui-ci en déplacement longitudinal, ainsi qu'une broche (16) montée dans le support (10), sur laquelle est agencé un écrou (17) fixé sur le tube intérieur de support (13), et un engrenage plateau (20) calé sur la broche (16), dans lequel vient engrener un pignon conique (25) situé au-dessus, qui peut être entraîné manuellement via un mécanisme à engrenages (22) disposé à l'extérieur et monté sur le tube extérieur de support (12) ou via un mécanisme à engrenages (23) intégré dans le tube extérieur de support (12), **caractérisé en ce que** l'engrenage-plateau (20) comporte, outre la denture conique supérieure (20a), dont les dents sont tournées vers le haut, une denture additionnelle, ou bien **en ce qu'**une denture adéquate à cet effet est prévue sur une partie qui est fixée sur l'engrenage-plateau (20) ou sur la broche (16).

2. Support selon la revendication 1, **caractérisé en ce que** la denture additionnelle est une denture conique inférieure (20b), qui se trouve au niveau de la région de bordure inférieure de fengrenage-plateau (20) et dont les dents sont tournées vers le bas.

3. Support selon la revendication 1 et 2, **caractérisé en ce qu'**un pignon conique (26) susceptible d'être entraîné par un moteur, vient engrener dans la denture conique (20b) de fengrenage-plateau (20).

4. Support selon la revendication 1 à 3, **caractérisé en ce que** le pignon conique (26) est calé sur le tenon d'entraînement (27a) du moteur (27), et **en ce que** le moteur (27) est fixé sur le tube extérieur de support (12) en introduisant une bride intermédiaire (29) centrée dans la paroi du tube extérieur de support (12).

5. Support selon la revendication 1 et 4, **caractérisé en ce que** le pignon conique (26) est disposé dans la bride intermédiaire (29).

6. Support selon la revendication 1, **caractérisé en ce que** la denture additionnelle est une denture de pignon droit (20c), qui se trouve dans la région de bordure de l'engrenage-plateau (20).

7. Support selon la revendication 1 et 6, **caractérisé en ce qu'**un pignon susceptible d'être entraîné par un moteur vient engrener dans la denture de pignon droit (20c) de l'engrenage-plateau (20).

8. Support selon la revendication 1, 6 et 7, **caractérisé en ce que** l'arbre d'entraînement du moteur (31) comporte une denture de pignon droit (31a), qui vient engrener dans la denture de pignon droit (20c) de l'engrenage-plateau les (20), ou bien **en ce qu'**un pignon présentant une denture adéquate est calé sur l'arbre d'entraînement du moteur (31).

9. Support selon la revendication 1, **caractérisé en ce que** pour le montage du pignon conique (26) il est prévu une échancrure (19a) sur la plaque de montage (19) ou un évidement (28a) sur le bloc de montage (28).

10. Support selon la revendication 1, **caractérisé en ce que** l'axe du moteur (27) est situé dans le même plan que l'axe de la broche (16), et le moteur (27) est agencé parallèlement à l'axe transversal de la plaque de vissage (15).

11. Support selon la revendication 1, **caractérisé en ce que** le moteur (31) est agencé de telle façon que son axe est parallèle à l'axe de la broche (16).

12. Support selon la revendication 1, **caractérisé en ce qu'**un porte-moteur (32) est prévu pour la fixation du moteur (31), lequel est réalisé de telle façon qu'il enferme à la manière d'un boîtier la région du moteur (31) qui se trouve à l'extérieur du tube extérieur de support (12), et est relié de manière solidaire ou amovible avec le tube extérieur de support (12).

13. Support selon la revendication 1, 2, 3 et 6, **caractérisé en ce que** l'engrenage-plateau (20) avec denture conique supérieure (20a) et avec denture conique inférieure (20b), ou bien la denture de pignon droit (20c) ainsi que le pignon conique (26) ou le pignon est le moteur (27, 30) se trouve dans ou sur le premier ou le second support d'une paire de supports.

14. Support selon la revendication 1, **caractérisé en ce qu'**un capteur (22a, 23b) est prévu dans le mécanisme à engrenages (22, 23), qui constate, sur le plan de la commande, la position en roue libre du mécanisme à engrenages (22, 23) avant que le moteur (27) soit mis en marche et que le support (10) puisse être utilisé avec un moteur.
